(19) Europäisches Patentamt / European Patent Office / Office européen des brevets

(11) **EP 4 438 341 B1**

(12) **EUROPEAN PATENT SPECIFICATION**

(45) Date of publication and mention
of the grant of the patent:
**17.06.2026  Bulletin 2026/25**

(21) Application number: **23166079.6**

(22) Date of filing: **31.03.2023**

(51) International Patent Classification (IPC):
**B60C 11/03** (2006.01)     **B60C 11/11** (2006.01)
**B60C 11/13** (2006.01)

(52) Cooperative Patent Classification (CPC):
**B60C 11/0302; B60C 11/033; B60C 11/11;**
**B60C 11/1392;** B60C 2011/0313; B60C 2011/0337;
B60C 2011/0344; B60C 2011/0346;
B60C 2011/0358; B60C 2011/0374

(54) **TIRE HAVING AN IMPROVED TREAD PATTERN**

REIFEN MIT VERBESSERTEM LAUFFLÄCHENPROFIL

PNEUMATIQUE AYANT UN MOTIF DE BANDE DE ROULEMENT AMÉLIORÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024  Bulletin 2024/40**

(73) Proprietor: **Bridgestone Europe NV/SA
1930 Zaventem (BE)**

(72) Inventor: **PISCOPO, Guido
00128 Rome (IT)**

(74) Representative: **Bardehle Pagenberg
Partnerschaft mbB
Patentanwälte Rechtsanwälte
Prinzregentenplatz 7
81675 München (DE)**

(56) References cited:
**WO-A1-2021/089964     DE-A1- 102017 203 221**

## Description

### Field of the invention

The present invention relates to a vehicle tire. One possible application of the disclosed tire relates to an all-season tire intended to equip a passenger vehicle or commercial van vehicles. The disclosure can also be applied to other tires, for example winter tires or tires for off the road applications.

### Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.

For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

For tires which are intended to be used on various ground conditions, such as wet, dry and snow-covered grounds, there are several design parameters which have to be optimized to provide good performance for all ground conditions. In some cases, optimizing a design parameter for one type of road condition may include some performance loss for other conditions. Thus, there is a need of improvement in various design parameters, targeting at parameters which have synergistic effects.

International application WO 2021/089964 A1 relates to a tire comprising a tread having two edges and a center, separating the tread into two portions of equal width with sets of tread bars. Each set of tread bars has three regions: an edge region, a central region, and an intermediate region.

German patent application DE 10 2017 203221 A1 discloses a pneumatic tire with a tread strip designed to be directional with central tread blocks in the tread strip central region and with shoulder blocks. The blocks are bounded in the circumferential direction by inclined grooves which extend in a V-shape relative to one another over the tread strip width and which, with the central tread blocks and shoulder blocks adjoining them in the circumferential direction, each form a pitch, wherein pitches with at least two different circumferential lengths are provided.

Thus, it is an object of the present invention to provide a tire having improved performance on all types of road surfaces, such as wet, dry and snow-covered roads.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive blocks arranged along a circumference of the tire and a plurality of first grooves arranged over the circumference of the tire, wherein each of the plurality of first grooves is arranged between two blocks of the set of consecutive blocks. Each of the set of consecutive blocks comprises a second groove extending through the block. The second groove is arranged to connect two consecutive first grooves, and to separate the block in a tire footprint into a shoulder section and a second section, a leading edge and a trailing edge. Each of the set of consecutive blocks further comprises a first chamfer arranged at the leading edge of the block and a second chamfer arranged at the trailing edge of the block. The tire in rolling condition has a ratio between a void surface and a rubber surface of at least 0.30 and at most 0.50.

Such a tire provides for improved characteristics, in particular for an all-season tire on snow-covered grounds. Generally, in order to increase traction on snow-covered grounds, the surface area of a block should be reduced, to allow for increased contact pressure between the block surface and the ground. The provided ratio between a void surface and a rubber surface of at least 0.30 and at most 0.50 allows for this improved contact pressure, and thus allows for enhanced grip performance, especially on snow-covered grounds. However, in order to ensure that the blocks, and especially the edges of the block, dig into the snow to enhance the tire's grip, the blocks also require the proper stiffness. Stiffness heavily depends on the width of the block, as reducing the width of a block to increase the void surface and contact pressure is typically tantamount to reducing the stiffness. In other words, leaving all other parameters (e.g., block shape, block height, inclination angle, edge ingredient, etc.), a reduction in block width generally results in a loss of stiffness. Consequently, if the desired surface void were acquired by reducing the block width (and not by applying chamfers), this would translate to a loss in stiffness impairing the overall performance of the tire.

To mitigate the effect of the increased surface void, the present disclosure provides for the first chamfer and the second chamfer. The chamfers reduce a surface of the block (in order to increase the contact pressure), without reducing the actual width of the block that is relevant to determine the block's stiffness. Since chamfers are provided only near the surface of the block, they only reduce the area of the top surface without reducing the width of the block. Thus, the effect of reducing the surface area (to increase the contact pressure) is mitigated by keeping the block's width high in all parts relevant for creating the stiffness. In other words, the present disclosure allows for maintaining the block's stiffness, despite its reduced rubber volume, without having to change to a material compound that would have stiffer properties. This is particularly beneficial to snow performance, as stiffer material compounds usually exhibit lower snow friction capability, such that the use of such a stiffer compound would lead to a loss of overall snow traction.

The provision of stiffer blocks also increases breaking performance on dry grounds, which even further benefits from providing the chamfers, as the chamfers can compensate for a loss in contact area during breaking due to block deformation. Thus, the tire according to the present disclosure provides for enhanced snow traction as well as improved dry breaking performance.

**Brief description of the drawings**

Fig. 1 shows a sketch of a vehicle tire according to the present disclosure.

Fig. 2 illustrates a half tread profile of a tire according to the present disclosure.

Fig. 3 illustrates an individual block of the set of consecutive blocks of Fig. 2.

Figs. 4A to 4C illustrate three cross-sections in different parts of the block of Fig. 3.

Fig. 5 illustrates a footprint of a tire according to the present disclosure.

Fig. 6 illustrates an exemplary embodiment of a V-shaped directional tread pattern according to the present disclosure.

Fig. 7 illustrates an exemplary embodiment of an S-shaped tread pattern according to the present disclosure.

**Detailed Description**

Generally, for increased snow performance, a ratio between a void surface and a rubber surface of at least 0.30 and at most 0.50 is desired. A higher ratio indicates a higher amount of void surface and thus a lower amount of rubber surface, such that a higher ratio corresponds to a higher contact pressure, and thus better snow performance.

However, in order to achieve a ratio inside the desired range, generally the extension of tread blocks needs to be reduced, e.g., by increasing the width of the first grooves. Such reduction in tread block size leads to a lower block stiffness and thus facilitates deformations of the blocks, which then impairs performance of the tire on all grounds, but especially on snowy grounds, because due to the deformation, the block may be restrained form sufficiently digging into the snow to provide the desired traction on the snow-covered ground. Moreover, high deformation may lead to a decrease in contact area, which further reduces overall grip due to lower friction. Therefore, according to the present disclosure, the extension of the blocks is left at the desired width, and the surface area is reduced by means of chamfers. This way, the block keeps its width along most of the block's radial extension, including the width in all parts essentially relevant for determining it stability. Thus, in short, the block keeps its stability while the surface area can still be reduced by means of the chamfers.

Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block, and may for example be at most 50% or less than the total height of the block. The width of the chamfer may be measured perpendicular to the block and corresponds to the width of the inclined chamfer wall when projected onto the outer tread surface.

Chamfers on the trailing edge additionally contribute to dry breaking performance. As a vehicle breaks, due to the inertia of the vehicle's mass, tread blocks are deformed and bend. This way, some of the rubber surface which is arranged towards the leading edge of the block loses contact with the road surface, thus reducing the contact surface of each block. A reduced contact surface leads to reduced friction force, which thus impairs the breaking performance of the tire.

By providing a chamfer on the trailing edge, the inclined surface of the chamfer is pushed towards the ground during breaking as the block bends, thus increasing the rubber surface. This way, surface loss at the leading end of the block can be compensated and the contact surface is increased, which leads to better breaking performance by an increased friction force. Consequently, a chamfer on the trailing edge of the block contributes to dry and wet breaking performance.

In contrast, a chamfer on the leading edge has proven to work efficiently to contribute to traction, especially on snow-covered grounds. Generally, in order to increase traction on snow-covered grounds, the surface area of a block should be reduced, to allow for increased contact pressure between the block surface and the ground. Providing the chamfer on the leading edge has shown to be a good location for reducing the area of the block surface. The increased contact pressure provided due to the chamfer on the leading edge, especially leading to a peak in contact pressure at the leading edge of the block, allows for the block, and especially the leading edge thereof, to dig into the snow more efficiently, thus increasing the traction of the tire on snow-covered grounds.

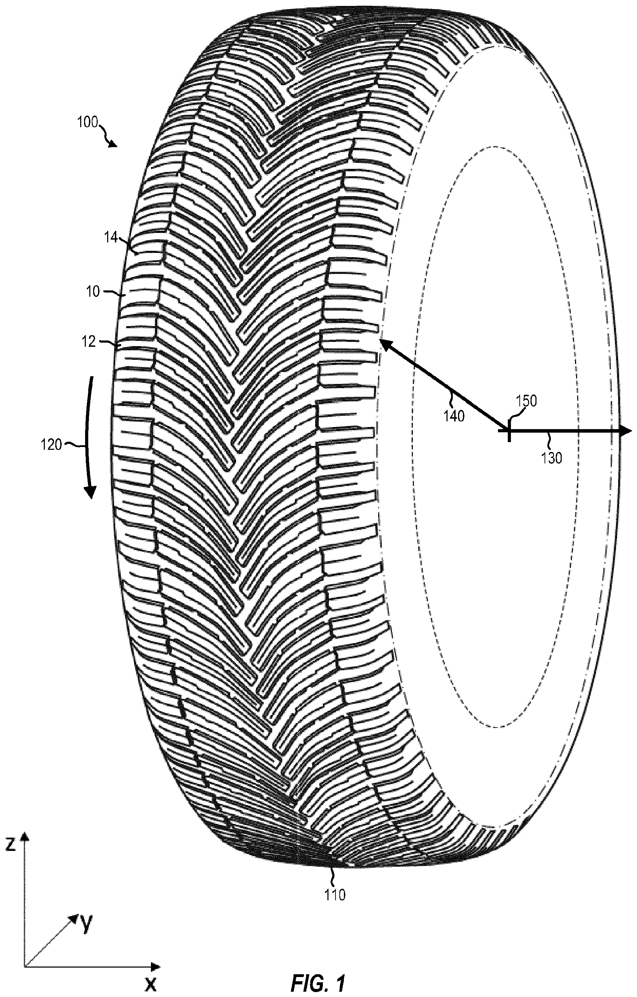

Fig. 1 shows a sketch of a vehicle tire according to the present disclosure.

According to Fig. 11, the tire 100 comprises a tread 110. The tread comprises a set of consecutive blocks 10 as well as grooves 12 arranged between two blocks 10 of the set of consecutive blocks. Moreover, a sipe 14 may be arranged within each of the set of consecutive blocks 10.

The blocks may be arranged consecutively a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example a depth of at least 1 mm, preferably at least 3 mm, is considered.

A "sipe" also represents an incision in the tread pattern. Reference herein to a "sipe" means an incision within a block, rather than a "groove" that separates a block. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full depth, but this does not necessarily have to be the case. For example, a depth of at least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 11, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

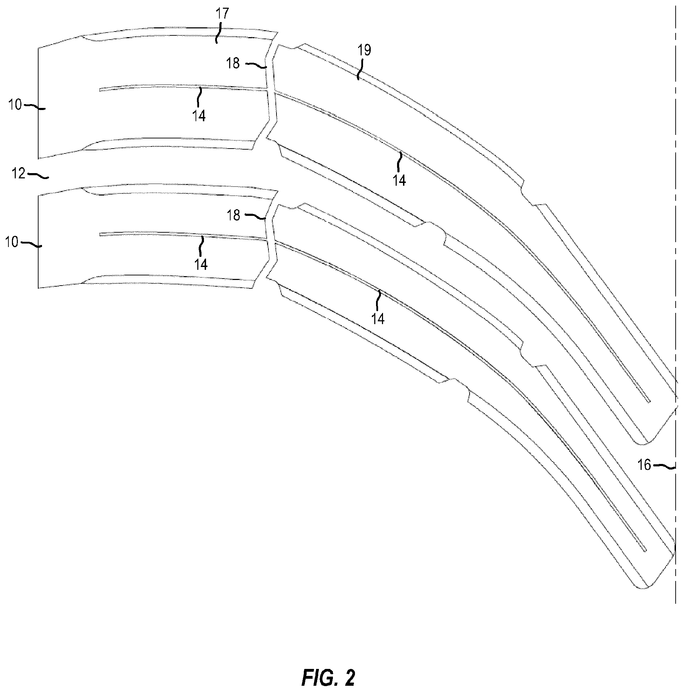

Fig. 2 illustrates a half tread profile of a tire according to the present disclosure.

According to Fig. 2, the tread comprises a set of consecutive blocks 10 arranged along a circumference of the tire. "Consecutive blocks" within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise chamfers in accordance with the present invention.

In some embodiments, described in more detail elsewhere herein, the tread comprises further blocks on the other side of the equatorial plane 16 of the tire. In some embodiments described elsewhere herein, these further blocks may have axisymmetric configuration with respect to the blocks 10 shown in Fig. 2Fig. 2, such that the overall pattern is V-Shaped. In other embodiments described elsewhere herein, the further blocks may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns having substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 12 arranged over the circumference of the tire, wherein each of the plurality of first grooves 12 is arranged between two blocks 10 of the set of consecutive blocks. Preferably, the grooves 12 start near the equatorial plane 16 of the tire and extend towards a shoulder end of the tread to open at the outer edge of the tire. The grooves 12 are generally delimited by the adjacent blocks 10.

The purpose of the grooves 12 is mainly the drainage of water from the contact patch by guiding the water along the groove 12 towards the shoulder of the tire and eject the water from there, as the tire rolls on the ground. Thus, the grooves 12 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

According to Fig. 2, the each one of the set of consecutive blocks comprises a second groove 18 arranged between a shoulder section 17 of the block and a second section 19. The second section 19 may be arranged in axial direction towards the equatorial plane 16 of the tire with respect to the shoulder section 17. In some embodiments, each second groove 18 is arranged in a substantially circumferential direction. In some embodiments, each second groove 18 may be arranged as a substantially straight line, e.g., with a small inclination with respect to the circumferential direction; in other embodiments, as shown for example in Fig. 2, each second groove 18 may be arranged with a zigzag form, e.g., including three differently inclined parts. Such zigzag form of the second groove 18 allows for a partial interruption of the strain and slippage behavior of the tire, thus improving the distribution of wear energy over the axial extension of the block 10.

The second groove 18 is intended to separate the block in a tire footprint into the shoulder section 17 and the second section 19. Therefore, the second groove may be arranged such that the shoulder section 17 and the second section 19 do not come into contact in the footprint of the tire.

The second grooves 18 thus generally have the purpose of mechanically decoupling the shoulder section 17 of the blocks 10 from the second section 19. For example, during acceleration or breaking, the shoulder section 17 of a block 10 may be especially strained because it is arranged generally perpendicularly to a circumferential direction of the tire. This may lead to deformation of the block 10 in the shoulder section 17. To ensure good steering performance as well as lateral road holding also during breaking and acceleration, it is thus desirable to mechanically decouple the shoulder section 17 from the second section 19. This decoupling is preferably achieved by providing a second groove 18 therebetween. This way, the second section 19 still provides for lateral road holding and steering performance despite the deformation of the shoulder section 17. A wider second groove improves the decoupling effect compared to a second groove of smaller width.

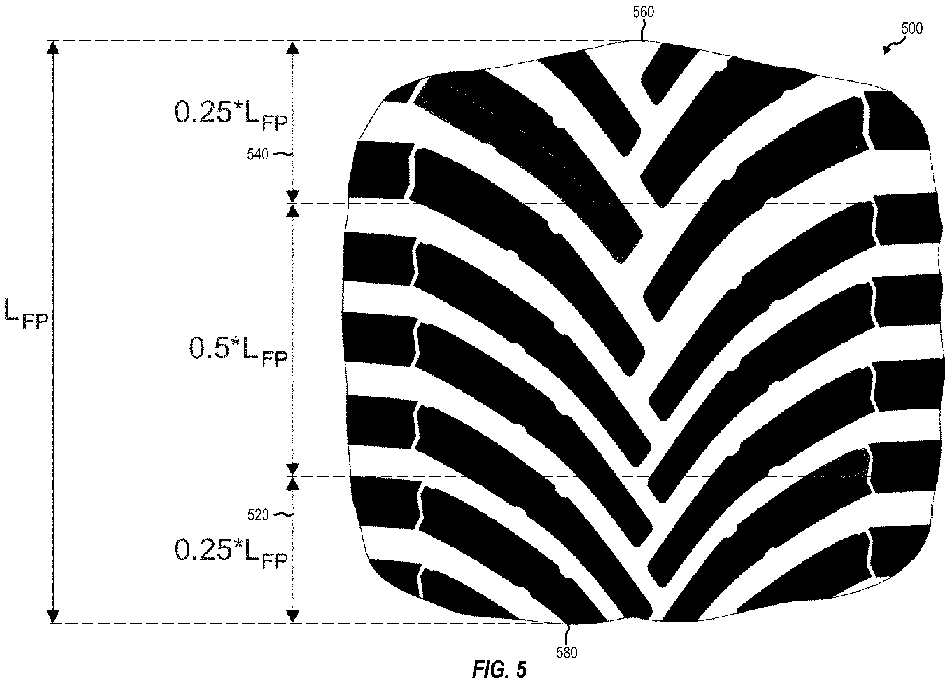

An exemplary tire footprint 500 showing the second grooves and their mechanically decoupling effect with respect to the shoulder section 17 and the second section 19 is illustrated in Fig. 5. A ratio between the depth of the second groove 18 and the depth of the first groove 12 may be at least 0.30. This further enhances the mechanical decoupling of the shoulder section 17 and the second section 19 of the block 10. The depth of the first groove(s) 12 may sometimes be denoted as the "Non skid depth" (NSD) and may be for example at least 6 mm and at most 12 mm, preferably at least 7 mm and at most 10 mm.

According to Fig. 2, the tread may further comprise a plurality of sipes 14. In the shown tread pattern, each of the plurality of sipes 14 may preferably extend substantially along a shape of each of the set of consecutive blocks 10. However, other arrangements and shapes of the sipes on the outer tread surface are also possible, for example wavy shapes, zigzag-shapes, and the like. The sipes do not necessarily have to follow the shape of the block. For example, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover such sipes may also be inclined with respect to the radial direction. Some sipes may comprise protrusions near a bottom of the sipe.

Sipes 14 are capable of trapping snow therein and providing an additional edge of the tread. This improves traction on snow-covered grounds.

In some embodiments, the plurality of sipes 14 may define an edge ingredient (EI) corresponding to the ratio between a sum of projected lengths of the plurality of sipes in an axial direction (SAP) and the circumference of the tread (C), such that

$$EI = \frac{\sum SAP}{C}, \qquad\qquad (1)$$

wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

The edge ingredient is directly linked to the stiffness of the blocks. Thus, depending on the tread pattern geometry, especially when applying chamfers, a proper edge ingredient should be chosen in order to maximize the snow digging capabilities and avoid extensive deformation of the blocks, which would counteract the benefits introduced by chamfers. The above range provides for such beneficial tradeoff between snow digging capabilities and block stiffness.

The tire according to Fig. 2 may further have a void volume, being the volume of all grooves, sipes and recesses provided in the tread, and a volume of rubber provided in the tread, together making up the total volume of the tread. I.e., if the total volume of the tire is $V_T$, the void volume being $V_V$ and the rubber volume being $V_R$, then the total volume $V_T$ would be $V_T = V_V + V_R$. In a preferred embodiment, the ratio $V_V/V_R$ between the void volume $V_V$ and the rubber volume $V_R$ may be at least 0.20 and at most 0.40. Preferably, the ratio $V_V/V_R$ may be at least 0.24 and at most 0.37, more preferably at least 0.28 and at most 0.35. The ratio $V_V/V_R$ is directly linked to the stiffness of the tread profile. Thus, a higher ratio $V_V/V_R$ indicates a higher amount of void in the tread, which increases contact pressure between the block and ground and is thus beneficial for snow performance. A lower ratio $V_V/V_R$ indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

The tire according to Fig. 2 has a ratio between a void surface and a rubber surface of at least 0.30 and at most 0.50. Preferably, the ratio between the void surface and the rubber surface may be at least one of the following:

- at least 0.30 and at most 0.35,
- at least 0.36 and at most 0.39,
- at least 0.40 and at most 0.45, and
- at least 0.46 and at most 0.50.

A ratio of at least 0.30 and at most 0.35 provides for improved dry breaking performance due to the higher amount of rubber surface area coming in contact with the ground.

The ratio of at least 0.36 and at most 0.39 provides for a good trade-off between dry breaking performance and snow traction as the rubber surface area is slightly decreased, thus increasing snow traction, while keeping relatively good breaking performance.

The ratio of at least 0.40 and at most 0.45 also provides for a good trade-off between dry breaking performance and snow traction as the rubber surface area is further decreased, thus further increasing snow traction, while still keeping relatively good breaking performance.

The ratio of at least 0.46 and at most 0.50 provides improved snow traction due to the lower amount of rubber surface area in contact with the ground and the resulting higher contact pressure.

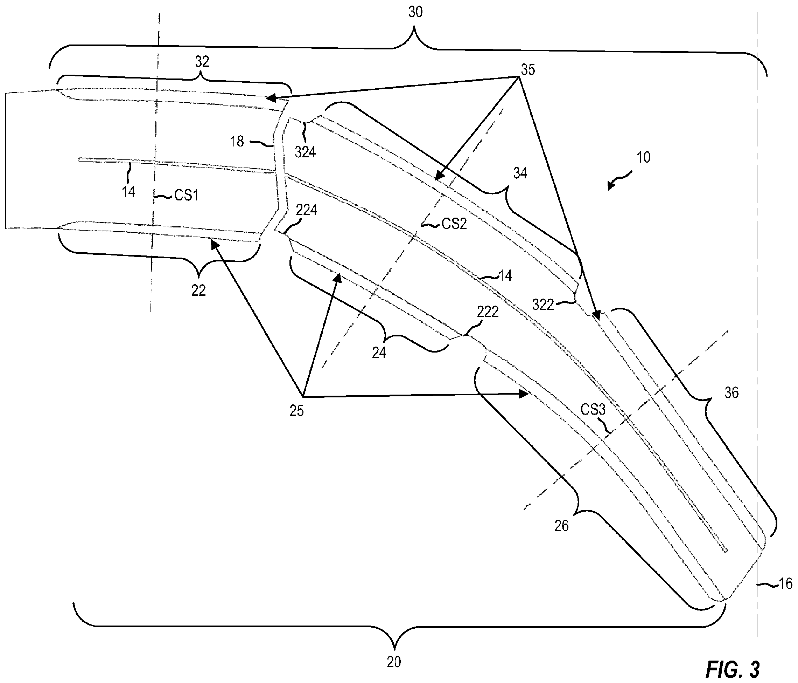

Fig. 3 illustrates an individual block of the set of consecutive blocks of Fig. 2.

According to Fig. 3, each block 10 comprises a leading edge 20 and a trailing edge 30.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

The leading edge 20 may comprise a first portion 22 arranged at a shoulder region of the tire, a second portion 24 arranged at a position axial inward to the first portion 22, and a third portion 26 arranged at a position axial inward to the second portion 24. The trailing edge 30 may comprise a first portion 32 arranged at a shoulder region of the tire, a second portion 34 arranged at a position axial inward to the first portion 32, and a third portion 36 arranged at a position axial inward to the second portion 34.

The first portions 22, 32 of the leading edge 20 and the trailing edge 30 may be denoted as "shoulder portions", the second portions 24, 34 of the leading edge 20 and the trailing edge 30 may be denoted as "intermediate portions" and the third portions 26, 36 of the leading edge 20 and the trailing edge 30 may be denoted as "central portion". The central portions may be arranged adjacent to the equatorial plane 16 of the tire.

As is illustrated in Fig. 3, the axial extension of corresponding edge portions may differ between the edges, i.e., as illustrated in Fig. 3, the second portion 34 of the trailing edge 30 may have a greater axial extension than the corresponding second portion 24 of the leading edge 20. Generally, the third portions 26, 36 of the leading edge 20 and the trailing edge 30 may have an axial extension of at least 25% and at most 40% of a half footprint width of the tire. Thus, the third portions 26, 36 preferably start adjacent to the equatorial plane 16 of the tire and extend axially outward up to a width of 25% to 40% of a half footprint width of the tire.

The second portions 24, 34 of the leading edge 20 and the trailing edge 30 may have an axial extension of at least 25% and at most 55% of a half footprint width of the tire. Thus, the second portions 24, 34 preferably start at an axial outward end of the third portions 26, 36 and extend axially outward up to a width of 65% to 80% of a half footprint width of the tire.

The first portions 22, 32 of the leading edge 20 and the trailing edge 30 may have an axial extension of at least 20% and at most 35% of a half footprint width of the tire. Thus, the first portions 22, 32 preferably start at an axial outward end of the second portions 24, 34 and extend axially outward up to an axial outward end of the tire, i.e., covering the total portion of the half footprint width axially outwards from the second portions 24, 34.

In some embodiments, a separation between two portions of the leading and trailing edge may be defined by either one of:

- a recess in the respective edge between neighboring portions;
- a variation in inclination angle of the respective edge to the circumferential direction of the tire;
- the direction or magnitude of curvature of the respective edge;
- a stepwise increase or decrease in chamfer width;
- a groove extending through the block in substantial circumferential direction; or
- a combination thereof.

For example, as is illustrated in Fig. 3, a recess 222 may separate the second portion 24 of the leading edge 20 from the third portion 26 of the leading edge 20. Further, recess 224 may separate the first portion 22 of the leading edge 20 from the second portion 24 of the leading edge 20. Similarly, recess 322 may separate the second portion 34 of the trailing edge 30 from the third portion 36 of the trailing edge, and recess 324 may separate the first portion 32 of the trailing edge 30 from the second portion 34 of the trailing edge 30.

Alternatively, other means of separation between the edge portions are possible. For example, as illustrated in Fig. 3, the second groove 18 extending through the block 10 in substantially circumferential direction may separate the first portions 22, 32 from the second portions 24, 34. While such a groove is only shown in Fig. 3 for separating the first portions 22, 32 from the second portions 24, 34, a similar groove may also be arranged between the second portions 24, 34 and the third portions 26, 36.

Furthermore, although in Fig. 3 only recesses 222, 224, 322, 324 as well as second groove 18 are shown as means for separating neighboring edge portions, other means can be utilized, such as a stepwise increase or decrease in chamfer width.

Alternatively, a change in direction or magnitude of curvature of the respective edge can be used, i.e., a change between concave and convex curvature, as well as an increase or decrease in curvature of the edge, can separate two neighboring edge portions.

Moreover, an inclination angle of the respective block to the circumferential direction of the tire can be used to determine a separation between edge portions.

According to one approach, the inclination angle of a respective part of the edge is determined by the angle between (i) a tangent applied on the respective edge of the block and (ii) the circumferential direction of the tire. If the respective part of the edge comprises a chamfer, the tangent is applied on the circumferentially outermost end of the block (so as to disregard the width and shape of the chamfer). This approach may be used if the respective portions of the edge are formed continuously or nearly continuously, i.e., without any substantial circumferential incision in-between, and shows on the respective edge a discontinuity, e.g., a significant change, in its inclination with respect to the circumferential direction of the tire. The discontinuity then corresponds to the separation between the neighboring edge portions.

Preferably, an inclination angle (i.e., the inclination angle of the tangent on the respective portion of the edge with respect to the circumferential direction) of the first portions 22, 32 may be at least 65° and at most 90° to the circumferential direction, preferably 75° and at most 90° to the circumferential direction, and more preferably, at least 85° and at most 90° to the circumferential direction. An inclination angle of the second portions 24, 34 may be at least 50° and at most 65° to the circumferential direction. Preferably, the inclination angle of the second portions 24, 34 may be at least 50° and at most 60° to the circumferential direction. An inclination angle of the third portions 26, 36 may be at least 20° and at most 50° to the circumferential direction. Preferably, the inclination angle of the third portions 26, 36 may be at least 30° and at most 50° to the circumferential direction.

According to another approach, which may be used if the respective edge does not show any discontinuity in its inclination with respect to the circumferential direction of the tire, a separation between edge portions is preferably determined according to the axial extension on the footprint width as described above in connection with Fig. 3, a recess in the respective edge, the direction or magnitude of curvature of the respective edge, a stepwise increase or decrease in chamfer width, or a groove extending through the block in substantial circumferential direction.

More preferably, in this approach, the inclination angle can also be used in addition to one or more of the afore-mentioned criteria. For example, the third portions 26, 36 that start adjacent to the equatorial plane the tire and extend axially outward up to a width of 25% to 40% of a half footprint width of the tire shown, for at least one of the possible extensions in this range, an angle of inclination that may be at least 20° and at most 50° to the circumferential direction, preferably, at least 30° and at most 50° to the circumferential direction. Likewise, the second portions 24, 34 that start at an axial outward end of the third portions and extend axially outward up to a width of 65% to 80% of a half footprint width of the tire show an inclination angle of at least 50° and at most 65° to the circumferential direction, preferably, at least 50° and at most 60°. Likewise, the first portions 22, 32 that start at an axial outward end of the second portions and extend axially outward up to an axial outward end of the tire show an inclination angle of at least 65° and at most 90° to the circumferential direction, preferably 75° and at most 90° to the circumferential direction, and more preferably, at least 85° and at most 90° to the circumferential direction.

Also, combinations of possible means for separating edge portions are possible. As one example, Fig. 3 shows for the separation between the first portions 22, 32 and the second portions 24, 34 a combination of recesses 224, 324 and second groove 18, and there are further conceivable combinations.

According to Fig. 3, block 10 further comprises a first chamfer 25 arranged at the leading edge 20 of the block 10 and a second chamfer 35 arranged at the trailing edge 30 of the block 10.

The first chamfer 25 may be arranged in at least one of the first portion 22, the second portion 24 and the third portion 26 of the leading edge 20, and the second chamfer 35 may be arranged in at least one of the first portion 32, the second portion 34 and the third portion 36 of the trailing edge 30. Preferably, the first chamfer 25 may be arranged in the first portion 22 of the leading edge 20, and the second chamfer 35 may be arranged in the first portion 32 of the trailing edge 30.

Providing chamfers on the first portions 22, 32, especially in the first portion 32 of the trailing edge 30 improves the breaking performance on dry grounds, as is discussed in more detail elsewhere herein.

In some embodiments, the first chamfer 25 may be arranged in at least two of the first portion 22, the second portion 24 and the third portion 26 of the leading edge 20, and the second chamfer 35 is arranged in at least two of the first portion 32, the second portion 34 and the third portion 36 of the trailing edge 30. Preferably, the first chamfer may be arranged in the first portion 22, the second portion 24 and the third portion 26 of the leading edge 20, and the second chamfer 35 may be arranged in the first portion 32, the second portion 34 and the third portion 36 of the trailing edge 30.

Providing the chamfers 25, 35 in more than just the first portions 22, 32 allows for a further increase in contact pressure by means of surface area reduction, thus improving snow traction as well as dry breaking performance.

In some embodiments, each one of the set of blocks 10 may further comprise a third groove extending through the block in a substantially circumferential direction. The third groove may be arranged to interrupt the leading edge 20 of the block 10 between the second portion 24 and the third portion 26, or the trailing edge 30 of the block 10 between the second portion 34 and the third portion 36. Providing a third groove allows for a further reduction of the block surface 40 and thus further enhances snow traction of the tire. Moreover, the third groove provides an additional edge which can dig into snow, thus allowing for enhanced traction on snow-covered grounds. Also, due to the additional void, water drainage can be improved.

In some embodiments, a ratio between the depth of the third groove and the depth of the first groove is at least 0.30. This further enhances the mechanical decoupling of the block parts, thus improving breaking and steering performance.

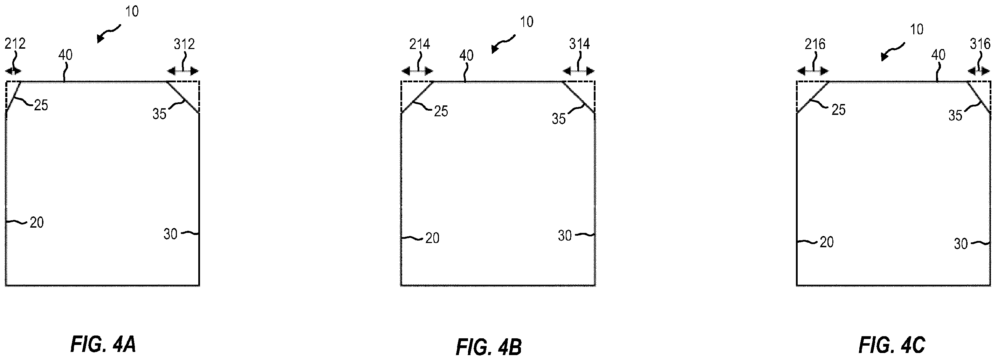

Fig. 3 further shows three cutting lines CS1, CS2 and CS3. Figs. 4A to 4C illustrate three cross-sections in different parts of the block of Fig. 3.

As is shown in Figs. 4A to 4C, the block 10 may comprise chamfers of different widths in different portions, such that the block surface 40 is reduced by means of the chamfers, while the stiffness of the blocks is not impaired by the surface area reduction, because the width of the block may remain greater at portions radially inward from the chamfers.

Fig. 4A illustrates a cross-sectional view of block 10, cut along line CS1. Thus, Fig. 4A illustrates the first chamfer 25 in the first portion 22 of the leading edge 20 of the block 10, as well as the second chamfer 35, arranged in the first portion 32 of the trailing edge 30 of the block 10. As discussed above, the chamfer widths are measured perpendicular to a block tangent. Fig. 4A illustrates the width 212 of the first chamfer 25 in the first portion 22 of the leading edge 20 and the width 312 of the second chamfer 35 in the first portion 32 of the trailing edge 30.

Fig. 4B illustrates a cross-sectional view of block 10, cut along line CS2. Thus, Fig. 4B illustrates the first chamfer 25 in the second portion 24 of the leading edge 20 of the block 10, as well as the second chamfer 35, arranged in the second portion 34 of the trailing edge 30 of the block 10. Fig. 4B illustrates the width 214 of the first chamfer 25 in the second portion 24 of the leading edge 20 and the width 314 of the second chamfer 35 in the second portion 34 of the trailing edge 30.

Fig. 4C illustrates a cross-sectional view of block 10, cut along line CS3. Thus, Fig. 4C illustrates the first chamfer 25 in the third portion 26 of the leading edge 20 of the block 10, as well as the second chamfer 35, arranged in the third portion 36 of the trailing edge 30 of the block 10. Fig. 4C illustrates the width 216 of the first chamfer 25 in the third portion 26 of the leading edge 20 and the width 316 of the second chamfer 35 in the second portion 34 of the trailing edge 30.

The widths of the first chamfer 25 and the second chamfer 35 may vary within a certain portion. For example, the first chamfer 25 may have a first width in a first position within the first portion 22 of the leading edge 20 and a second width in a second position within the first portion 22 of the leading edge 20, which is different from the first width. The same applies to the second chamfer 35.

While the embodiments described above are directed to blocks having three portions, blocks with more portions, for example with four or more portions, are also possible. This can be realized for example by sub-partitioning, i.e., partitioning a portion into one or more continuously formed sub-portions.

Fig. 5 illustrates a footprint of a tire according to the present disclosure.

According to Fig. 5, the tire footprint 500 may have a footprint length $L_{FP}$ measured in circumferential direction. The footprint may have a central footprint area making up 50 % of the footprint length. The central footprint area can be obtained by measuring the tire footprint 500 as described below. From the so-measured tire footprint 500, the top portion 540 and the bottom portion 520, both having an extension in circumferential direction of 25% of the footprint length $L_{FP}$, are cropped as indicated in Fig. 5, such that a central footprint portion making up 50% of the footprint length $L_{FP}$ remains, which is centered between the uppermost end 560 of the tire footprint 500 and a lowermost end 580 of the tire footprint 500.

In some embodiments, an average width of the second grooves in the central footprint area may be at least 0.8 mm and at most 5.0 mm, preferably at least 0.8 mm and at most 2.5 mm. Greater width of the second grooves provides for a higher surface void, thus improving snow traction due to the increased contact pressure. Moreover, the second groove may provide mechanical decoupling of the shoulder section 17 and the second section 19 of the blocks 10, which allows for improved breaking and accelerating performance, as well as improved overall road handling. However, the greater width also provides increased local wear energy in the immediate vicinity of the groove, while a narrower width shows better wear performance. The above range provides for a beneficial balance between improved snow traction, breaking and handling, as well as good wear performance.

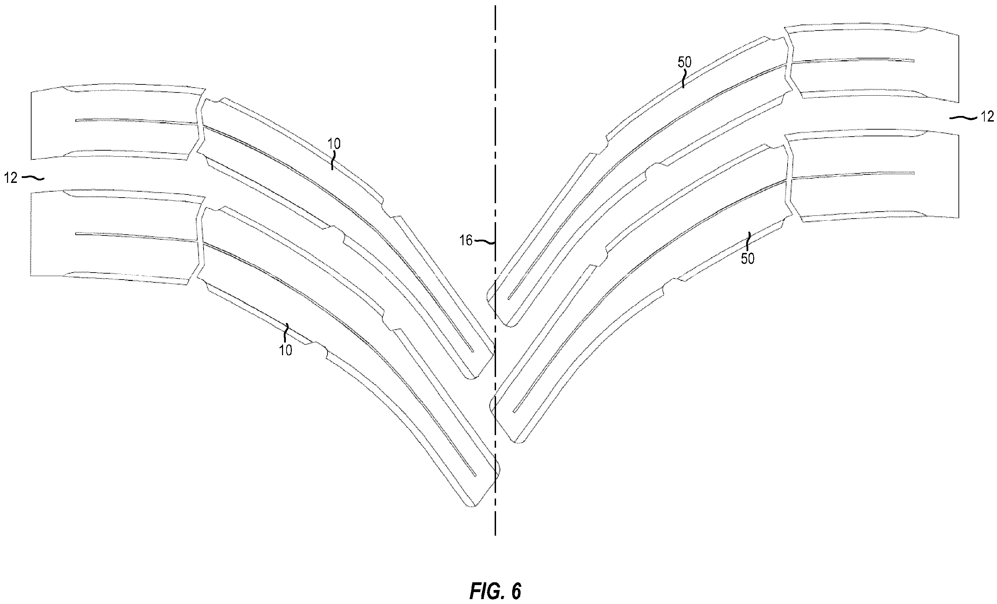

Fig. 6 illustrates an exemplary embodiment of a V-shaped directional tread pattern according to the present disclosure.

According to Fig. 6, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 6, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

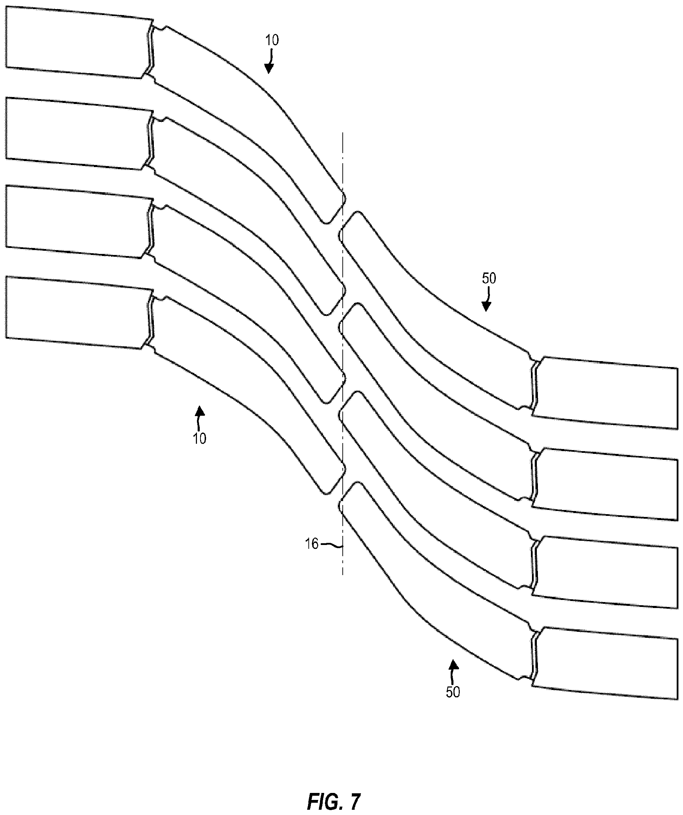

For example, Fig. 7 illustrates an exemplary embodiment of an S-shaped tread pattern according to the present disclosure. For some embodiments, according to Fig. 7, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

**Tire footprint measurement**

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

Tire void volume and rubber volume measurement

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint conditions and on new tires, which have not been exposed to wear before the measurement.

**List of reference numbers:**

| | |
|---|---|
| 10, 50 | block |
| 12 | first groove |
| 14 | sipe |
| 16 | equatorial plane |
| 17 | shoulder section |
| 18 | second groove |
| 19 | second section |
| 20 | leading edge |
| 22, 32 | first portion |
| 24, 34 | second portion |
| 25 | first chamfer |
| 26, 36 | third portion |
| 30 | trailing edge |
| 35 | second chamfer |
| 40 | block surface |
| 100 | tire |
| 110 | tread |
| 120 | circumferential direction |
| 130 | axial direction |
| 140 | radial direction |
| 150 | center |
| 212, 214, 216, 312, 314, 316 | chamfer width |
| 222, 224, 322, 324 | recess |
| 500 | tire footprint |
| 520 | bottom portion |
| 540 | top portion |
| 560 | uppermost end |
| 580 | lowermost end |

**Claims**

1. A tire (100) for a vehicle comprising a tread (110), the tread comprising:

   a set of consecutive blocks (10, 50) arranged along a circumference of the tire; and
   a plurality of first grooves (12) arranged over the circumference of the tire, wherein each of the plurality of first grooves is arranged between two blocks (10, 50) of the set of consecutive blocks;
   each of the set of consecutive blocks comprising:

   a second groove (18) extending through the block, wherein the second groove is arranged to connect two consecutive first grooves, and wherein the second groove is arranged to separate the block in a tire footprint (500) into a shoulder section (17) and a second section (19);
   a leading edge (20) and a trailing edge (30);
   a first chamfer (25) arranged at the leading edge of the block; and
   a second chamfer (35) arranged at the trailing edge of the block, **characterized in that** the tire in rolling condition has a ratio between a void surface and a rubber surface of at least 0.30 and at most 0.50.

2. The tire of claim 1, wherein the ratio between the void surface and the rubber surface is at least one of the following:

   - at least 0.30 and at most 0.35,
   - at least 0.36 and at most 0.39,
   - at least 0.40 and at most 0.45, and
   - at least 0.46 and at most 0.50.

3. The tire of any one of the preceding claims, wherein the tire footprint has a footprint length ($L_{FP}$) measured in circumferential direction, the footprint having a central footprint area making up 50 % of the footprint length, wherein an average width of the second grooves in the central footprint area is at least 0.8 mm and at most 5.0 mm, preferably at least 0.8 mm and at most 2.5 mm.

4. The tire of any one of the preceding claims, the tread further comprising:

   a plurality of sipes (14) defining an edge ingredient, EI, corresponding to the ratio between a sum of projected lengths of the plurality of sipes in an axial direction, SAP, and the circumference of the tread, C, such that

   $$EI = \frac{\sum SAP}{C},$$

   wherein the EI is at least 2 and at most 20.

5. The tire of any one of the preceding claims, wherein each leading and trailing edge (20, 30) comprises a first portion (22, 32) arranged at a shoulder region of the tire, a second portion (24, 34) arranged at a position axial inward to the first portion, and a third portion (26, 36) arranged at a position axial inward to the second portion; and
   wherein the first chamfer (25) is arranged in at least one of the first, second and third portion of the leading edge, and the second chamfer (35) is arranged in at least one of the first, second and third portion of the trailing edge.

6. The tire of claim 5, wherein the first chamfer (25) is arranged in the first portion (22) of the leading edge (20), and the second chamfer (35) is arranged in the first portion (32) of the trailing edge (30).

7. The tire of any one of claims 5 and 6, wherein the first chamfer is arranged in at least two of the first, second and third portion of the leading edge, and the second chamfer is arranged in at least two of the first, second and third portion of the trailing edge.

8. The tire of any one of claims 5 to 7, the first chamfer is arranged in the first, second and third portion of the leading edge, and the second chamfer is arranged in the first, second and third portion of the trailing edge.

9. The tire of any one of claims 5 to 8, wherein

the third portion of the leading edge or the trailing edge has an axial extension of at least 25% and at most 40% of a half footprint width of the tire,

the second portion of the leading or trailing edge has an axial extension of at least 25% and at most 55% of a half footprint width of the tire, and

the first portion of the leading or trailing edge has an axial extension of at least 20% and at most 35% of a half footprint width of the tire.

10. The tire of any one of claims 5 to 9, wherein a separation between two portions of the leading and trailing edge is defined by either one of:

a recess (222, 224, 322, 324) in the respective edge between neighboring portions;
a variation in inclination angle of the respective edge to the circumferential direction of the tire;
the direction or magnitude of curvature of the respective edge;
a stepwise increase or decrease in chamfer width;
a groove extending through the block in substantial circumferential direction; or
a combination thereof.

11. The tire of any one of the preceding claims, wherein the second groove (18) is arranged to mechanically decouple the shoulder section (17) from the second section (19).

12. The tire of any one claims 5 to 10, wherein a third groove is extending through each block in a substantially circumferential direction, wherein the third groove is arranged to interrupt the leading edge of the block between the second portion and the third portion, or the trailing edge of the block between the second portion and the third portion.

13. The tire of claim 12, wherein a ratio between the depth of the third groove and the depth of the first groove is at least 0.30.

14. The tire of any one of the preceding claims, wherein a ratio between the depth of the second groove and the depth of the first groove is at least 0.30.

15. The tire of any one of the preceding claims, wherein the tread has a ratio between a void volume and a rubber volume of at least 0.20 and at most 0.40.

**Patentansprüche**

1. Reifen (100) für ein Fahrzeug, umfassend eine Lauffläche (110), wobei die Lauffläche umfasst:

eine Reihe von aufeinanderfolgenden Blöcken (10, 50), die entlang eines Umfangs des Reifens angeordnet sind; und
eine Vielzahl von ersten Rillen (12), die über den Umfang des Reifens angeordnet sind, wobei jede der Vielzahl von ersten Rillen zwischen zwei Blöcken (10, 50) des Satzes von aufeinanderfolgenden Blöcken angeordnet ist; wobei jeder des Satzes von aufeinanderfolgenden Blöcken umfasst:

eine zweite Rille (18), die sich durch den Block erstreckt, wobei die zweite Rille angeordnet ist, um zwei aufeinanderfolgende erste Rillen zu verbinden, und wobei die zweite Rille angeordnet ist, um den Block in einer Reifenaufstandsfläche (500) in einen Schulterbereich (17) und einen zweiten Bereich (19) zu unterteilen;
eine Vorderkante (20) und eine Hinterkante (30);
eine erste Fase (25), die an der Vorderkante des Blocks angeordnet ist; und
eine zweite Fase (35), die an der Hinterkante des Blocks angeordnet ist, **dadurch gekennzeichnet, dass** der Reifen in dem Reifen im Rollzustand ein Verhältnis zwischen einer Hohlraumoberfläche und einer Gummioberfläche von mindestens 0,30 und höchstens 0,50 aufweist.

2. Reifen nach Anspruch 1, wobei das Verhältnis zwischen der Hohlraumoberfläche und der Gummioberfläche mindestens eines der Folgenden ist:

- mindestens 0,30 und höchstens 0,35,

- mindestens 0,36 und höchstens 0,39,
- mindestens 0,40 und höchstens 0,45, und
- mindestens 0,46 und höchstens 0,50.

3. Reifen nach einem der vorstehenden Ansprüche, wobei die Reifenaufstandsfläche eine in Umfangsrichtung gemessene Aufstandsflächenlänge ($L_{FP}$) aufweist, wobei die Aufstandsfläche einen zentralen Aufstandsflächenbereich aufweist, der 50 % der Aufstandsflächenlänge ausmacht, wobei eine durchschnittliche Breite der zweiten Rillen in dem zentralen Aufstandsflächenbereich mindestens 0,8 mm und höchstens 5,0 mm, vorzugsweise mindestens 0,8 mm und höchstens 2,5 mm beträgt.

4. Reifen nach einem der vorstehenden Ansprüche, wobei die Lauffläche ferner umfasst:

eine Vielzahl von Lamellen (14), die einen Kantenbestandteil, EI, definieren, entsprechend dem Verhältnis zwischen einer Summe von projizierten Längen der Vielzahl von Lamellen in einer axialen Richtung, SAP, und dem Umfang der Lauffläche, C, derart, dass

$$EI = \frac{\sum SAP}{C},$$

wobei der EI mindestens 2 und höchstens 20 beträgt.

5. Reifen nach einem der vorstehenden Ansprüche, wobei jede Vorderkante und Hinterkante (20, 30) einen ersten Abschnitt (22, 32) umfasst, der in einem Schulterbereich des Reifens angeordnet ist, einen zweiten Abschnitt (24, 34), der an einer Position axial einwärts zu dem ersten Abschnitt angeordnet ist, und einen dritten Abschnitt (26, 36), der an einer Position axial einwärts zu dem zweiten Abschnitt angeordnet ist; und
wobei die erste Fase (25) in mindestens einem des ersten, zweiten und dritten Abschnitts der Vorderkante angeordnet ist, und die zweite Fase (35) in mindestens einem des ersten, zweiten und dritten Abschnitts der Hinterkante angeordnet ist.

6. Reifen nach Anspruch 5, wobei die erste Fase (25) in dem ersten Abschnitt (22) der Vorderkante (20) angeordnet ist und die zweite Fase (35) in dem ersten Abschnitt (32) der Hinterkante (30) angeordnet ist.

7. Reifen nach einem der Ansprüche 5 und 6, wobei die erste Fase in mindestens zwei des ersten, zweiten und dritten Abschnitts der Vorderkante angeordnet ist, und die zweite Fase in mindestens zwei des ersten, zweiten und dritten Abschnitts der Hinterkante angeordnet ist.

8. Reifen nach einem der Ansprüche 5 bis 7, wobei die erste Fase in dem ersten, zweiten und dritten Abschnitt der Vorderkante angeordnet ist und die zweite Fase in dem ersten, zweiten und dritten Abschnitt der Hinterkante angeordnet ist.

9. Reifen nach einem der Ansprüche 5 bis 8, wobei

der dritte Abschnitt der Vorderkante oder der Hinterkante eine axiale Erstreckung von mindestens 25 % und höchstens 40 % einer halben Aufstandsflächenbreite des Reifens aufweist,
der zweite Abschnitt der Vorder- oder Hinterkante eine axiale Erstreckung von mindestens 25 % und höchstens 55 % einer halben Aufstandsflächenbreite des Reifens aufweist, und
der erste Abschnitt der Vorder- oder Hinterkante eine axiale Erstreckung von mindestens 20 % und höchstens 35 % einer halben Aufstandsflächenbreite des Reifens aufweist.

10. Reifen nach einem der Ansprüche 5 bis 9, wobei eine Trennung zwischen zwei Abschnitten der Vorder- und Hinterkante durch eines der Folgenden definiert ist:

eine Aussparung (222, 224, 322, 324) in der jeweiligen Kante zwischen benachbarten Abschnitten;
eine Variation des Neigungswinkels der jeweiligen Kante zur Umfangsrichtung des Reifens;
die Richtung oder Größe der Krümmung der jeweiligen Kante;
eine stufenweise Zunahme oder Abnahme der Fasenbreite;
eine Rille, die sich durch den Block in im Wesentlichen Umfangsrichtung erstreckt; oder
eine Kombination davon.

**11.** Reifen nach einem der vorstehenden Ansprüche, wobei die zweite Rille (18) angeordnet ist, um den Schulterbereich (17) mechanisch von dem zweiten Bereich (19) zu entkoppeln.

**12.** Reifen nach einem der Ansprüche 5 bis 10, wobei sich eine dritte Rille durch jeden Block in einer im Wesentlichen Umfangsrichtung erstreckt, wobei die dritte Rille angeordnet ist, um die Vorderkante des Blocks zwischen dem zweiten Abschnitt und dem dritten Abschnitt oder die Hinterkante des Blocks zwischen dem zweiten Abschnitt und dem dritten Abschnitt zu unterbrechen.

**13.** Reifen nach Anspruch 12, wobei ein Verhältnis zwischen der Tiefe der dritten Rille und der Tiefe der ersten Rille mindestens 0,30 beträgt.

**14.** Reifen nach einem der vorstehenden Ansprüche, wobei ein Verhältnis zwischen der Tiefe der zweiten Rille und der Tiefe der ersten Rille mindestens 0,30 beträgt.

**15.** Reifen nach einem der vorstehenden Ansprüche, wobei die Lauffläche ein Verhältnis zwischen einem Hohlraumvolumen und einem Gummivolumen von mindestens 0,20 und höchstens 0,40 aufweist.

**Revendications**

**1.** Pneumatique (100) pour véhicule comprenant une bande de roulement (110), la bande de roulement comprenant :

un ensemble de blocs consécutifs (10, 50) agencés le long d'une circonférence du pneumatique ; et
une pluralité de premières rainures (12) agencées sur la circonférence du pneumatique, dans lequel chacune de la pluralité de premières rainures est agencée entre deux blocs (10, 50) de l'ensemble de blocs consécutifs ; chacun de l'ensemble de blocs consécutifs comprenant :

une deuxième rainure (18) s'étendant à travers le bloc, dans lequel la deuxième rainure est agencée pour relier deux premières rainures consécutives, et dans lequel la deuxième rainure est agencée pour séparer le bloc dans une empreinte de pneumatique (500) en une section d'épaulement (17) et une seconde section (19) ;
un bord d'attaque (20) et un bord de fuite (30) ;
un premier chanfrein (25) agencé au niveau du bord d'attaque du bloc ; et
un second chanfrein (35) agencé au niveau du bord de fuite du bloc, **caractérisé en ce que** le pneumatique dans le pneumatique en état de roulement a un rapport entre une surface vide et une surface en caoutchouc d'au moins 0,30 et d'au plus 0,50.

**2.** Pneumatique selon la revendication 1, dans lequel le rapport entre la surface vide et la surface en caoutchouc est au moins l'un des éléments suivants :

- au moins 0,30 et au plus 0,35,
- au moins 0,36 et au plus 0,39,
- au moins 0,40 et au plus 0,45, et
- au moins 0,46 et au plus 0,50.

**3.** Pneumatique selon l'une quelconque des revendications précédentes, dans lequel l'empreinte de pneumatique a une longueur d'empreinte ($L_{FP}$) mesurée dans une direction circonférentielle, l'empreinte ayant une aire centrale d'empreinte représentant 50 % de la longueur d'empreinte, dans lequel une largeur moyenne des secondes rainures dans l'aire centrale d'empreinte est d'au moins 0,8 mm et d'au plus 5,0 mm, de préférence d'au moins 0,8 mm et d'au plus 2,5 mm.

**4.** Pneumatique selon l'une quelconque des revendications précédentes, la bande de roulement comprenant en outre :

une pluralité de lamelles (14) définissant un ingrédient de bord, EI, correspondant au rapport entre une somme de longueurs projetées de la pluralité de lamelles dans une direction axiale, SAP, et la circonférence de la bande de roulement, C, de telle sorte que

$$EI = \frac{\sum SAP}{C},$$

dans lequel l'EI vaut au moins 2 et au plus 20.

5. Pneumatique selon l'une quelconque des revendications précédentes, dans lequel chaque bord d'attaque et de fuite (20, 30) comprend une première partie (22, 32) disposée au niveau d'une région d'épaulement du pneumatique, une deuxième partie (24, 34) disposée au niveau d'une position axiale vers l'intérieur par rapport à la première partie, et une troisième partie (26, 36) disposée au niveau d'une position axiale vers l'intérieur par rapport à la deuxième partie ; et

dans lequel le premier chanfrein (25) est agencé dans au moins l'une parmi les première, deuxième et troisième parties du bord d'attaque, et le second chanfrein (35) est agencé dans au moins l'une parmi les première, deuxième et troisième parties du bord de fuite.

6. Pneumatique selon la revendication 5, dans lequel le premier chanfrein (25) est agencé dans la première partie (22) du bord d'attaque (20), et le second chanfrein (35) est agencé dans la première partie (32) du bord de fuite (30).

7. Pneumatique selon l'une quelconque des revendications 5 et 6, dans lequel le premier chanfrein est agencé dans au moins deux des première, deuxième et troisième parties du bord d'attaque, et le second chanfrein est agencé dans au moins deux des première, deuxième et troisième parties du bord de fuite.

8. Pneumatique selon l'une quelconque des revendications 5 à 7, le premier chanfrein est agencé dans les première, deuxième et troisième parties du bord d'attaque, et le second chanfrein est agencé dans la première, la deuxième et la troisième partie du bord de fuite.

9. Pneumatique selon l'une quelconque des revendications 5 à 8, dans lequel

la troisième partie du bord d'attaque ou du bord de fuite a une extension axiale d'au moins 25 % et d'au plus 40 % d'une demi-largeur d'empreinte du pneumatique,
la deuxième partie du bord d'attaque ou de fuite a une extension axiale d'au moins 25 % et d'au plus 55 % d'une demi-largeur d'empreinte du pneumatique, et
la première partie du bord d'attaque ou de fuite a une extension axiale d'au moins 20 % et d'au plus 35 % d'une demi-largeur d'empreinte du pneumatique.

10. Pneumatique selon l'une quelconque des revendications 5 à 9, dans lequel une séparation entre deux parties du bord d'attaque et du bord de fuite est définie par l'un parmi :

un évidement (222, 224, 322, 324) dans le bord respectif entre des parties voisines ;
une variation de l'angle d'inclinaison du bord respectif par rapport à la direction circonférentielle du pneumatique ;
la direction ou l'amplitude de courbure du bord respectif ;
une augmentation ou une diminution par étapes de la largeur de chanfrein ;
une rainure s'étendant à travers le bloc dans une direction circonférentielle substantielle ; ou
une combinaison de ceux-ci.

11. Pneumatique selon l'une quelconque des revendications précédentes, dans lequel la deuxième rainure (18) est agencée pour désaccoupler mécaniquement la section d'épaulement (17) de la seconde section (19).

12. Pneumatique selon l'une quelconque des revendications 5 à 10, dans lequel une troisième rainure s'étend à travers chaque bloc dans une direction sensiblement circonférentielle, dans lequel la troisième rainure est agencée pour interrompre le bord d'attaque du bloc entre la deuxième partie et la troisième partie, ou le bord de fuite du bloc entre la deuxième partie et la troisième partie.

13. Pneumatique selon la revendication 12, dans lequel un rapport entre la profondeur de la troisième rainure et la profondeur de la première rainure est d'au moins 0,30.

14. Pneumatique selon l'une quelconque des revendications précédentes, dans lequel un rapport entre la profondeur de la deuxième rainure et la profondeur de la première rainure est d'au moins 0,30.

15. Pneumatique selon l'une quelconque des revendications précédentes, dans lequel la bande de roulement présente un rapport entre un volume vide et un volume de caoutchouc d'au moins 0,20 et d'au plus 0,40.

**FIG. 1**

*FIG. 2*

FIG. 3

FIG. 4A          FIG. 4B          FIG. 4C

EP 4 438 341 B1

*FIG. 5*

*FIG. 6*

EP 4 438 341 B1

*FIG. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021089964 A1
- DE 102017203221 A1